# EUROPÄISCHE PATENTSCHRIFT

(11) **EP 0 428 018 B1**
(45) Veröffentlichungstag und Bekanntmachung des Hinweises auf die Patenterteilung: **14.09.1994**
(21) Anmeldenummer: 90120958.5
(22) Anmeldetag: 01.11.1990
(51) Int. Cl.: B65D 88/14, B65D 90/06, B65D 90/04, B32B 5/18

(54) **Auskleidung für Behältnisse**
Liner for containers
Garnitures internes pour grands réceptacles

(30) Priorität: 14.11.1989 DE 8913412 U
(43) Veröffentlichungstag der Anmeldung: 22.05.1991
(73) Patentinhaber: M + N Flexible Folien GmbH, D-46414 Rhede/Westf. (DE)
(72) Erfinder: Niehaus, Gottfried, W-4292 Rhede-Vardingholt (DE); Meier, Josef, W-4280 Borken 2 (DE)
(74) Vertreter: Türk, Gille, Hrabal, Leifert

(56) Entgegenhaltungen:
- EP-A- 0 110 022
- WO-A-88/00565
- DE-A- 3 125 839
- DE-U- 8 913 412
- US-A- 3 294 034
- US-A- 4 860 912

## Beschreibung

Die Erfindung betrifft eine Auskleidung für Behältnisse wie Container zum thermischen Isolieren derselben, welche an die Innenwände eines Behältnisses anlegbare Matten oder Folien aus Isoliermaterial wie Kunststoff aufweist bzw. aus derartigen Matten oder Folien gebildet ist.

Container, beispielsweise für Luftfracht, müssen für bestimmte Transportgüter gelegentlich mit einer thermisch isolierenden Auskleidung versehen werden, die jedoch nicht dauerhaft in dem Container verbleiben soll, sondern nach Beendigung eines bestimmten Transportes wieder ausgebaut wird, jedoch erneut verwendet werden soll.

Es ist bekannt, zum Auskleiden von Containern Bahnen aus Isoliermaterial zu verwenden, die aufgerollt gelagert werden, so daß sie beim Auskleiden eines Containers abzurollen sind. Die Anbringung einer aus einzelnen Isoliermaterial-Bahnen bestehenden Auskleidung ist umständlich und zeitraubend. Insbesondere ist die Anbringung der Isoliermaterial-Bahnen in einem Container mit viel Handarbeit verbunden und somit kostspielig. Das Auskleiden in Eckbereichen erfordert dabei besonderes Geschick. Ein weiterer Nachteil besteht darin, daß beim Ausbauen der Auskleidung die einzelnen Isoliermaterial-Bahnen voneinander gelöst und wieder aufgerollt werden müssen, um für eine nächste Verwendung bereit zu stehen. Wenn die einzelnen Isoliermaterial-Bahnen aufgerollt sind, kann man anhand der Rolle vielfach nicht erkennen, an welche Stelle eines Containers das Ende der betreffenden Isoliermaterial-Bahn gehört, obwohl gerade im Luftfracht-Verkehr verwendete Container genormte Formen und Abmessungen haben, so daß eine thermisch isolierende Auskleidung nicht einzelnen Container-Typen bzw. -Größen angepaßt werden muß.

Um Lager- und Transportbehälter in Isolierbehälter umzurüsten, ist ein mobiler Isoliereinsatz bekannt, der aus einer Haube aus flexiblem Material mit in Taschen eingebrachtem Schaumstoff, einer isolierenden Bodenplatte und einer flüssigkeitsdichten Bodenwanne besteht (EP 0 110 022 A). Dieser mehrteilige Isoliereinsatz ist jedoch verhältnismäßig aufwendig und läßt sich zur begrenzt raumsparend zusammenlegen.

Der Erfindung liegt die Aufgabe zugrunde, eine wiederverwendbare Auskleidung für Behältnisse wie Container zum thermischen Isolieren derselben zu schaffen, die einstückig und damit einfach ausgebildet ist, besonders raumsparend zusammengelegt und schnell, exakt und mit wenig Handarbeit ein- und ausgebaut werden kann.

Diese Aufgabe wird erfindungsgemäß mit einer Auskleidung gemäß Anspruch 1 gelöst. Vorteilhafte Ausgestaltungen der Erfindung sind Gegenstand der Unteransprüche.

Die erfindungsgemäße Auskleidung ist ein dreidimensionaler vorgefertigter Hohlkörper, welcher der inneren Kontur eines Behältnisses, insbesondere eines für Luftfrachtzwecke bestimmten Containers angepaßt ist und welcher aus matten- oder folienförmigen bahnartigem Isoliermaterial zusammengesetzt bzw. aufgebaut ist, wobei die Seitenwände des Hohlkörpers zusammenklappbar bzw. zusammenfaltbar sind, um den Hohlkörper, wenn die Auskleidung nicht benötigt wird, flach zusammenlegen und raumsparend lagern und transportiern zu können.

Der die erfindungsgemäße Auskleidung bildende dreidimensional ausstellbare Hohlkörper ist rundum geschlossen und weist lediglich an einer Seite eine verschließbare Öffnung auf, durch die der ausgestellte Hohlkörper begehbar und be- und entladbar ist. Eine mit Hilfe von Flächenreißverschlüssen in der Schließposition zu haltende Klappe kann zum endgültigen Verschließen des zusammenklappbaren Hohlkörpers vorgesehen sein. An der Außenseite des Hohlkörpers können Haftelemente wie spezielle klebende oder haftende Stellen oder Bereiche vorgesehen sein, um die erfindungsgemäße Auskleidung sicher in einem Container in der ausgestellten Position zu halten, jedoch sollten diese Haftstellen nicht so stark haftende Wirkung zeigen, daß sie das Zusammenklappen und Ausbauen der Auskleidung spürbar behindern.

Vorzugsweise besteht das Isoliermaterial der erfindungsgemäßen Auskleidung aus einer Verbundfolie, welche einen Kern aus Schaumstoff enthält. Der Kern der Verbundfolie kann dabei mit verschweißbarem Material wie Polyethylen beschichtet sein.

Ein derartiges Isoliermaterial zeigt gute Isolierwirkung bei verhältnismäßig geringer Schichtdicke, läßt sich gut zu dem erfindungsgemäßen Hohlkörper verarbeiten, weil es verschweißbar ist, und hat ausreichende Steifigkeit, um dem ausgeklappten dreidimensionalen Hohlkörper die gewünschte Stabilität zu verleihen. Zum Zusammenfalten kann das Isoliermaterial mit vorgefertigten bzw. vorbestimmten Knickstellen versehen sein, beispielsweise mit eingeprägten Faltlinien.

Die erfindungsgemäße Auskleidung läßt sich auf verhältnismäßig geringen Raum zusammenfalten und nach dem Einlegen in einen geöffneten Container problemlos ausfalten und in dem Container anbringen. Daher kann man entsprechende Auskleidungen im Bedarfsfall zum Einsatzort bringen, ohne sie zuvor bereits in einen Container einbauen zu müssen. Vielmehr ist der Einbau unmittelbar vor dem Einladen der thermisch isoliert zu transportierenden Güter möglich. Nach Beendigung des speziellen Transportes läßt sich die Auskleidung sofort wieder ausbauen und flach zusammenlegen. Da diese Auskleidungen raumsparend transportiert und gelagert werden können, ist es wirtschaftlich vertretbar, derartige Auskleidungen zentral auf Lager zu halten und jeweils für spezielle Bedarfsfälle kurzfristig an den jeweiligen Einsatzort zu bringen.

In der Zeichnung ist ein Ausführungsbeispiel einer erfindungsgemäßen Auskleidung für Luftfracht-Container schematisch dargestellt, und zwar zeigt
- Fig. 1: eine schaubildliche Ansicht einer als dreidimensionaler Hohlkörper ausgebildeten Auskleidung für Container in aufgebautem Zustand und
- Fig. 2: einen Ausschnitt aus einer Verbundfolie, aus der der die Auskleidung bildende dreidimensionale Hohlkörper aufgebaut ist.

Die als dreidimensionaler zusammenfaltbarer bzw. zusammenlegbarer Hohlkörper ausgebildete Auskleidung (1) ist der Form eines nicht dargestellten Containers angepaßt, der beispielsweise im Luftfrachtverkehr benutzt wird.

Die Auskleidung (1) weist einen Boden (2), Seitenwände (3 und 4), ein Dach (5), eine Vorderwand (6) und eine Rückwand (7) auf.

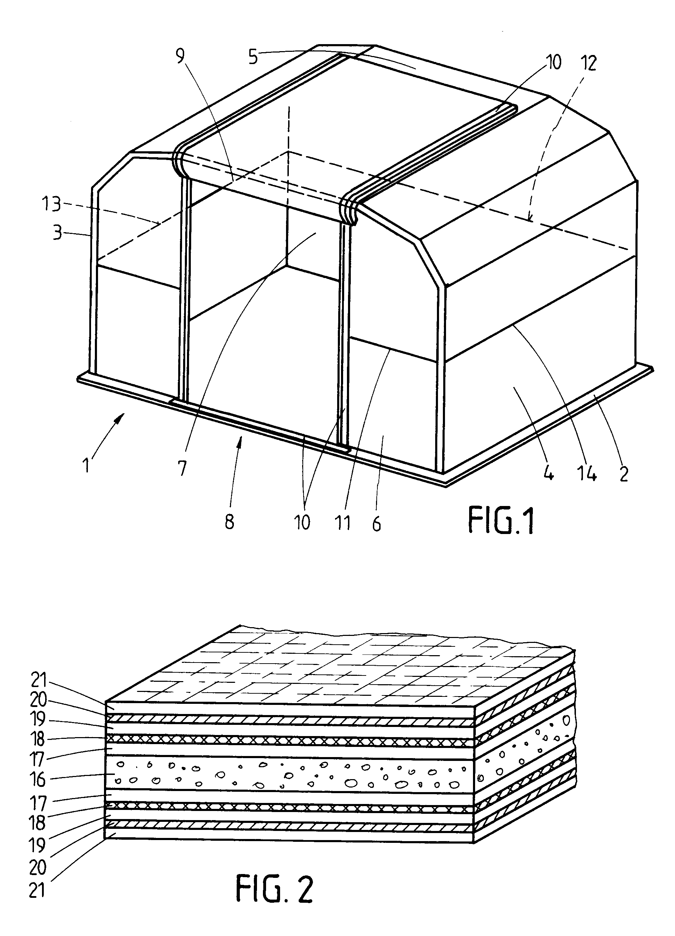

Die Vorderwand (6) enthält eine über ihre gesamte Höhe verlaufende öffnung (8), durch die die Auskleidung (1) be- und entladen werden kann. Die öffnung (8) ist mittels einer hochklappbaren Klappe (9) verschließbar. Seitlich der Öffnung (8) sind an der Vorderwand (6) und den Rändern der Klappe (9) Flächenreißverschlüsse (10) angebracht, um die Klappe (9), wenn sie aus der in Fig. 1 gezeigten zurückgeklappten Position vor die öffnung (8) gebracht worden ist, in der Schließposition zu halten.

Der Boden (2), die Seitenwände (3 und 4) und das Dach (5) sind einstückig aus einer Verbundfolie zusammengesetzt, wobei dies durch Zusammenschweißen einzelner Teile der Verbundfolie erzielt werden kann. Die Vorderwand (6) und die Rückwand (7) sind ebenfalls dauerhaft befestigt, insbesondere angeschweißt.

In die Vorderwand (6) und die Rückwand (7) eingeformte Knickfalten (11 und 12) gestatten ein Zusammenklappen dieser Wände für ein raumsparendes Zusammenlegen der Auskleidung (1).

In den Seitenwänden (3 und 4) sind entsprechende Knickfalten (13 und 14) vorgesehen, um auch diese Wände raumsparend zusammenfalten zu können. Gegebenenfalls können weitere Knickfalten im übergangsbereich zwischen den Seitenwänden (3 und 4) und dem Dach (5) vorgesehen sein.

Die gesamte Auskleidung bzw. deren einzelne Abschnitte bestehen vorzugsweise aus einer Verbundfolie, deren Aufbau im einzelnen aus Fig. 2 zu entnehmen ist, wobei die einzelnen Lagen der Verbundfolie (15) in Fig. 2 vergrößert und auch nicht maßstabgetreu dargestellt sind, um sie besser erkennen zu lassen.

Die Verbundfolie (15) weist einen Kern (16) aus Schaumstoff auf, vorzugsweise aus verhältnismäßig biegweichem offenzelligen Schaumstoff. Beidseits ist dieser Kern (16) mit überzügen versehen, welche der Verbundfolie insgesamt eine verhältnismäßig große Steifigkeit und Stabilität verleihen.

Die auf beiden Seiten des Kernes (16) angeordneten Überzüge bestehen aus einer aufkaschierten Polyethylenfolie (17), einer Gewebeschicht (18), einer weiteren Polyethylenfolie (19), einer Aluminiumfolie (20) und als äußerste Abdeckung aus einer dritten Polyethylenfolie (21). Die auf beiden Seiten des Kernes (16) angeordneten verschiedenen Folien sind gegenüber dem Kern verhältnismäßig dünn und nehmen die Oberflächenstruktur des Kernes (16) bzw. der Gewebeschichten (18) an, so daß die Verbundfolie (15) im allgemeinen keine glatte Oberfläche aufweist, wie in Fig. 2 aus Gründen der vereinfachten Darstellung gezeigt ist.

Da die Verbundfolie (15) an ihrer Oberfläche aus Polyethylen besteht, können Abschnitte der Verbundfolie (15) miteinander verschweißt werden, was für die Verbindung von Abschnitten der Verbundfolie (15) zur dreidimensionalen Auskleidung (1) vorteilhaft ist. Auch können die Teile der Flächenreißverschlüsse (10) auf die entsprechenden Folien aufgeschweißt werden.

Der Boden (2) des Hohlkörpers ist in Fig. 1 mit seitlich überstehenden Kanten gezeigt, um den Boden besser sichtbar zu machen. Normalerweise schließt der Boden (2) jedoch bündig mit den Seitenwänden (3 und 4), der Vorderwand (6) und der Rückwand (7) ab.

Die in Fig. 1 zeichnerisch dargestellte Auskleidung (1) ist für einen speziellen genormten Typ eines Luftfracht-Containers ausgelegt, nämlich für einen in das Hauptdeck eines Frachtraumes eines Flugzeuges gehörenden Container. Für andere Container-Formen bzw. Container-Typen sind Auskleidungen entsprechender Formen vorzusehen, ohne daß diese sich in technischer Hinsicht von der Auskleidung gemäß Fig. 1 unterscheiden.

## Patentansprüche

1. Auskleidung (1) für Behältnisse wie Container zum thermischen Isolieren derselben mit an die Innenwände eines Behältnisses anlegbaren und an diesen lösbar zu befestigenden Matten (2 bis 7) oder Folien aus Isoliermaterial wie Kunstoff, wobei die Auskleidung aus einem vorgefertigten zusammenklappbaren bzw. zusammenfaltbaren dreidimensionalen Hohlkörper aus zusammengeschweißten matten- oder folienförmigen biegsamen Isoliermaterial in Form einer Vielschicht Verbundfolie (15), die auf jeder Seite eines aus Schaumstoff bestehenden Kernes (16) eine Verstärkung (18) aus Gewebe und eine Aluminium-Folie (20) als Beschichtungslagen aufweist, wobei zwischen diesen einzelnen Lagen jeweils eine PE-Folie (17,19) angeordnet ist und die beidseitige äußeren Abdeckungen (21) aus Polyethylenfolie sind, besteht, der an einer Seite eine verschließbare Öffnung (8) und auf seiner Außenseite Haftstellen aufweist.

2. Auskleidung nach Anspruch 1, dadurch gekennzeichnet, daß im Bereich der Öffnung (8) am Hohlkörper eine die Öffnung verschließende Klappe (9) und Flächenreißverschlüsse (10) zum Halten der Klappe in der Schließposition vorgesehen sind.

3. Auskleidung nach Anspruch 1 oder 2, dadurch gekennzeichnet, daß die Seitenwände (3,4,6,7) Knickfalten (11,12,13,14) aufweisen.

## Claims

1. A liner (1) used for thermally insulating receptacles such as containers, said liner comprising mats (2 to 7) or sheets made of an insulating material such as a synthetic material, and which are applied and removably secured to the inner walls of a container, said liner consisting of a prefabricated collapsible or foldable tridimensional hollow body made of welded mat-like or sheet-like flexible insulating material, and having the shape of a multilayer composite foil (15), said foil comprising at both sides of a core (16) made of foam material a stiffening layer (18) made of fabric, as well as an aluminum sheet (20) used as coating layers, said coating layers comprising intermediate thereof a PE-sheet (17), (19) respectively, and wherein the outer face and back coatings (21) are made of a polyethylene sheet, and which is provided at one side thereof with a lockable aperture (8) and which further comprises adhesive portions at the outer side thereof.

2. A liner as defined by claim 1.
**characterized in that**
in the area of said aperture (8) of the hollow body are provided a shutter (9) closing said aperture as well as flat slide fasteners (10) for holding said shutter in a closed position.

3. A liner as defined by either of claims 1 or 2,
**characterized in that**
both side walls (3, 4, 6, 7) are provided with bending folds (11, 12, 13, 14).

## Revendications

1. Garniture interne (1) pour grands réceptacles, tels que des conteneurs, et utilisée pour réaliser leur insulation thermique, comprenant des nattes (2 à 7) ou des feuilles composées d'une matière isolante, telle qu'une matière plastique, et fixées de manière amovible à ces dernières, ladite garniture interne étant composée d'un corps tridimensionnel creux préfabriqué repliable ou rabattable, et consistant de nattes ou de feuilles flexibles isolantes soudées sous forme d'une feuille composite (15) multi-couches, et comprenant sur chacun des cotés d'un noyau en matière mousse (16) une couche de tissu de renforcement (18), ainsi qu'une feuille aluminium (20) servant respectivement de couches de revêtement, ainsi qu'une feuille PE (17, 19) disposée en intermédiaire entre ces différentes couches, et dans lequel les revêtements extérieurs (21) disposés de part et d'autre sont composés d'une feuille en polyethylene, et qui, sur l'un de ses cotés, comprend une ouverture fermante (8) et, sur son autre coté, des points adhésifs.

2. Une garniture suivant la revendication 1,
**caractérisée en ce que**
dans la zone de ladite ouverture (8) dudit corps creux est prévu une fermeture fermant cette ouverture, ainsi que des fermetures éclair planes (10) maintenant ladite fermeture dans sa position close.

3. Une garniture suivant l'une des revendications 1 ou 2,
**caractérisée en ce que**
lesdites parois latérales (3, 4, 6, 7) sont pourvues de pliures rabattables (11, 12, 13, 14).
